# EUROPEAN PATENT APPLICATION

(11) **EP 4 219 638 A1**
(43) Date of publication of application: **02.08.2023**
(21) Application number: 21872511.7
(22) Date of filing: 22.09.2021
(51) Int. Cl.: C09D 101/00, B65D 65/00, C08B 3/00, C08B 13/00, C08B 37/00, C08B 37/04, C08B 37/08, C09D 103/00, C09D 105/00, C09K 3/18, D06M 15/01, D21H 17/02, D21H 17/03, D21H 19/10, D21H 21/00, D21H 21/14

(54) **MODIFIED NATURAL MATERIAL AND USE THEREOF**

(30) Priority: 24.09.2020 JP 2020160116; 22.06.2021 JP 2021103437
(71) Applicant: Daikin Industries, Ltd., Osaka-shi, Osaka 530-0001 (JP)
(72) Inventor: AKUTA, Ryou, Osaka-shi, Osaka 530-8323 (JP); MATSUMOTO, Akane, Osaka-shi, Osaka 530-8323 (JP); SAKAMAKI, Tatsunori, Osaka-shi, Osaka 530-8323 (JP); HIGASHI, Masahiro, Osaka-shi, Osaka 530-8323 (JP); AOYAMA, Hirokazu, Osaka-shi, Osaka 530-8323 (JP); KISHIKAWA, Yosuke, Osaka-shi, Osaka 530-8323 (JP); TANAKA, Yoshito, Osaka-shi, Osaka 530-8323 (JP); SHIOTANI, Yuko, Osaka-shi, Osaka 530-8323 (JP); AIHARA, Marina, Osaka-shi, Osaka 530-8323 (JP); TOUGO, Yukinori, Osaka-shi, Osaka 530-8323 (JP); DEWA, Wakako, Osaka-shi, Osaka 530-8323 (JP); IIDA, Mayumi, Osaka-shi, Osaka 530-8323 (JP)
(74) Representative: Hoffmann Eitle
(86) International application number: PCT/JP2021/034861
(87) International publication number: WO 2022/065382

(57) **Abstract**

An oil repellent agent capable of imparting satisfactory oil repellency is provided using a natural material that is a biomass material in harmony with the environment. The oil repellent agent has a structure such that a hydrogen atom in a hydroxy group in a natural material having at least one hydroxy group is substituted by an R group. R group: -Y-Z [wherein Y represents a direct bond,-C(=O)-, -C(=O)-NR'- or -C(=S)-NR'- (wherein R' represents a hydrogen atom or a C₁ to C₄ alkyl group); and Z represents a hydrocarbon group having 1 to 40 carbon atoms and optionally having a substituent or a polysiloxane]. The natural material is preferably a monosaccharide, a polysaccharide, glycerine or polyglycerine.

## Description

### Technical Field

The present disclosure relates to a modified natural product obtained by modifying a natural product, and applications thereof, in particular an oil-resistant agent.

### Background Art

Paper containers hold promise as an alternative to single-use plastic containers. Food packaging materials and food containers made of paper need to prevent moisture and oil in food from seeping out, and an oil-resistant agent is applied to the paper either internally or externally. In addition, the need for biodegradable materials and bio-based materials is increasing from the viewpoint of environmental consideration.

Patent Literature 1 (JP 2019-99953 A) discloses that oil resistance is developed by a combination of oxidized starch or hydrophobized starch and an epichlorohydrin-modified fatty acidbased sizing agent. However, to prevent an acetic acid odor, pH adjustment of the mixture is required. In addition, the miscibility between the modified starch and the fatty acid sizing agent is important, and it is difficult to adjust the composition.

Patent Literature 2 (JP 2020-066805 A) discloses an oil-resistant agent that uses modified starch, clay, a styrenebutadiene copolymer, and an antifoaming agent.

Patent Literature 3 (JP 2019-70202 A) discloses an oil-resistant paper that combines a fluorine-containing polymer that does not contain a perfluoroalkyl group having 7 or more carbon atoms and a water-soluble or water-dispersible cellulose derivative.

Patent Literature 4 (WO 2015/162787 A) discloses the use of cellulose having a long-chain alkyl group (12 to 18 carbon atoms) for an optical film application by acetylating cellulose acetate. Although water resistance is mentioned, but oil resistance is not disclosed.

Patent Literature 5 (JP 2002-012258 A) discloses that a cellulose acetate film imparts oil resistance, water resistance, heat resistance, and the like to a food container. However, in the Examples, water resistance and heat resistance are evaluated, but oil resistance is not evaluated.

### Citation List

### Patent Literature

Patent Literature 1: JP 2019-99953 A
Patent Literature 2: JP 2020-066805 A
Patent Literature 3: JP 2019-70202 A
Patent Literature 4: WO 2015/162787 A
Patent Literature 5: JP 2002-012258 A

### Summary of Invention

### Technical Problem

It is an object of the present disclosure to provide an oil-resistant agent that can impart sufficient oil resistance using a natural product, which is biomass material, while being in harmony with the environment.

### Solution to Problem

The present disclosure relates to a modified natural product (modified natural compound) that is modified from a natural product (natural compound) to have an organic modifying group. Examples of the organic modifying group include an aliphatic hydrocarbon group having 1 to 40 carbon atoms, a substituted aliphatic hydrocarbon group having 1 to 40 carbon atoms, or a polysiloxane.

The modified natural product can be used as an oil-resistant agent.

Preferred embodiments of the present disclosure include the following.

### Mode 1:

An oil-resistant agent including a modified natural product having at least one hydroxy group, wherein a hydrogen atom of the hydroxy group of the natural product is replaced with an R group represented by:

-Y-Z

wherein Y is a direct bond, -C(=O)-, -C(=O)-NR'-, or -C(=S)-NR'-, where R' is a hydrogen atom or an alkyl group having 1 to 4 carbon atoms, and
Z is an optionally-substituted hydrocarbon group having 1 to 40 carbon atoms, or a polysiloxane.

### Mode 2:

The oil-resistant agent according to mode 1, wherein the natural product is a natural product other than starch.

### Mode 3:

The oil-resistant agent according to mode 1 or 2, wherein the natural product is a compound of a natural product as is or a compound derived from a natural product.

### Mode 4:

The oil-resistant agent according to any of modes 1 to 3, wherein the natural product is a monosaccharide, a polysaccharide, glycerin, or polyglycerin.

### Mode 5:

The oil-resistant agent according to any of modes 1 to 4, wherein
the natural product is at least one selected from a high-molecular-weight natural product and a low-molecular-weight natural product,
the high-molecular-weight natural product is at least one selected from cellulose, curdlan, pullulan, alginic acid, carrageenan, guar gum, chitin, chitosan, locust bean gum, kappa-carrageenan, iota-carrageenan, polyglycerin, isomaltodextrin, xanthan gum, gellan gum, tamarind seed gum, and cycloamylose, and
the low-molecular-weight natural product is at least one selected from glucose, sucrose, mannitol, sorbitol, sorbitan, maltitol, stevioside, cyclodextrin, glycerin, menthol, xylitol, glucosamine, catechin, anthocyanin and quercetin, gluconic acid, malic acid, xylose, inositol, phytic acid, menthol, sucralose, fructose, maltose, trehalose, lactosucrose, erythritol, erythritol, ascorbic acid, kojic acid, cholesterol, vanillin, lactic acid, tartaric acid, citric acid, and chlorogenic acid.

### Mode 6:

The oil-resistant agent according to any of modes 1 to 5, wherein the substitution ratio of the hydrogen atom of the hydroxy group by R is 3 to 100%.

### Mode 7:

The oil-resistant agent according to any of modes 1 to 6, wherein
Z is an optionally-substituted aliphatic hydrocarbon group having 1 to 40 carbon atoms or a polysiloxane, and the substituent is a hydroxyl group, an ester group, an R'₃Si group, an (R'O)₃Si group, a carboxyl group, or a salt of a carboxyl group, where R' is a hydrogen atom or an alkyl group having 1 to 4 carbon atoms.

### Mode 8:

The oil-resistant agent according to any of modes 1 to 7, wherein a contact angle of n-hexadecane of the oil-resistant agent is 11 degrees or more.

### Mode 9:

The oil-resistant agent according to any of modes 1 to 8, wherein the modified natural product has a melting point of 40 degrees or more or does not have a melting point.

### Mode 10:

The oil-resistant agent according to any of modes 1 to 9, wherein the oil-resistant agent has a viscosity of 5 cP or more and 100 cP or less at a solution concentration of 14.8 mg/mL.

### Mode 11:

The oil-resistant agent according to any of modes 1 to 10, which is a water dispersion composition.

### Mode 12:

The oil-resistant agent according to any of modes 1 to 11, which is for paper.

### Mode 13:

A textile product to which the oil-resistant agent according to any of modes 1 to 12 is attached.

### Mode 14:

An oil-resistant paper including the oil-resistant agent according to any of modes 1 to 12.

### Mode 15:

The oil-resistant paper according to mode 14, which is a food packaging material or a food container.

### Mode 16:

A treatment method including externally or internally treating paper with the oil-resistant agent according to any of modes 1 to 12.

### Advantageous Effects of Invention

The modified natural product of the present disclosure exhibits excellent oil resistance. An oil-resistant agent including the modified natural product of the present disclosure is bio-based, and therefore is biodegradable without placing a burden on the ecological environment.

### Description of Embodiment

The present disclose preferably provides a modified natural product (modified natural compound) having at least one hydroxy group, wherein a hydrogen atom of the hydroxy group of the natural product is replaced with an R group represented by:

-Y-Z

wherein Y is a direct bond, -C(=O)-, -C(=O)-NR'-, or -C(=S)-NR'- (R' is a hydrogen atom or an alkyl group having 1 to 4 carbon atoms, and
Z is an optionally-substituted hydrocarbon group having 1 to 40 carbon atoms, or a polysiloxane.

Examples of the substituent include a hydroxyl group, an ester group, an R'₃Si group, an (R'O)₃Si group, a carboxyl group, or a salt of a carboxyl group (each R' is independently a hydrogen atom or an alkyl group having 1 to 4 carbon atoms).

Any two R may combine with each other to form a ring.

A modified natural product (modified natural compound) has an -O-R group that was not present in the natural product.

When the modified natural product (modified natural product compound) contains two or more -O-R groups, the -O-R groups may be the same or may be a combination of -O-R groups having different structures.

Examples of the R group include -Z, -C(=O)-Z, -C(=O)-NH-Z, - C(=O)-NR'-Z, and -C(=S)-NR'-Z (wherein Z and R' each have the same meaning as above).

Z is a monovalent group.

Z is a hydrocarbon group having 1 to 40 carbon atoms or a hydrocarbon group having 1 to 40 carbon atoms having a substituent.

Z may be a hydrocarbon group having 1 to 3 carbon atoms, but is preferably a branched hydrocarbon group having 4 or more carbon atoms, a long-chain hydrocarbon group (or (long-chain) linear hydrocarbon group), or a cyclic hydrocarbon group. The hydrocarbon group is preferably an aliphatic hydrocarbon group, particularly a saturated aliphatic hydrocarbon group, and more particularly an alkyl group. -CH₃ groups have a lower surface free energy than - CH₂-, and are more likely to exhibit liquid repellency. Therefore, a structure with many branches and many -CH₃ groups is preferred. On the other hand, long-chain alkyl groups of a certain length exhibit high liquid repellency due to their crystallinity.

In the branched hydrocarbon group, the number of -CH₃ groups is preferably 2 to 15, for example 3 to 10 or 4 to 9. On the other hand, a long-chain alkyl group having a certain length (for example, 16 to 40 carbon atoms) exhibits high water-repellency due to its crystallinity. Thus, a branched hydrocarbon group (e.g., a branched (e.g., 3 to 10 or 4 to 8 carbon atom) alkyl group), for example, a t-butyl group, a neopentyl group, or a hydrocarbon with a multi-branched structure having 5 to 30 carbon atoms, or a long-chain hydrocarbon group (or long-chain linear hydrocarbon group), for example, an alkyl group having 16 to 40 or 16 to 26 carbon atoms, in particular 18 to 22 carbon atoms, is preferred. The long-chain hydrocarbon group is preferably a stearyl group, an icosyl group or a behenyl group.

The number of carbon atoms in the hydrocarbon group may be 2 or more, 4 or more, 7 or more, 10 or more, 12 or more, 14 or more, 16 or more, 18 or more, or 20 or more, and is preferably 10 or more or 12 or more. The number of carbon atoms in the hydrocarbon group may be 40 or less, 35 or less, 30 or less, 25 or less, 22 or less, 20 or less, or 18 or less. Preferably, it is 30 or less.

The hydrocarbon group may be an aliphatic hydrocarbon group, an aromatic hydrocarbon group, or an aromatic-aliphatic hydrocarbon group, and is preferably an aliphatic hydrocarbon group. The hydrocarbon group may be linear, branched, or cyclic, preferably linear or branched, and more preferably is linear. The hydrocarbon group may be unsaturated (e.g., monounsaturated, diunsaturated, tri-unsaturated, tetra-unsaturated, or polyunsaturated) or saturated, such as an alkyl group.

Specific examples of the hydrocarbon group include alkyl groups such as a n-butyl group, a t-butyl group, a pentyl group, a neopentyl group, a hexyl group, a heptyl group, an octyl group, an isooctyl group, a nonyl group, a decyl group, an undecyl group, a lauryl group, a tridecyl group, a tetradecyl group, a pentadecyl group, a palmityl group, a heptadecyl group, a stearyl group, a nonadecyl group, a behenyl group, a 2-ethylhexyl group, and an isostearyl group; alkenyl groups such as an oleyl group, a palmitoyl group, and an eicosenyl group; and cycloalkyl groups such as a cyclohexyl group.

Z may be a hydrocarbon group substituted with a carboxyl group.

It is preferred that such a hydrocarbon group substituted with a carboxyl group is a group represented by the formula: -AC(=O)-OH (A is a direct bond or a hydrocarbon group having 1 to 40 or 1 to 10 carbon atoms, such as an alkylene group).

Z may be a hydrocarbon group substituted with a salt of a carboxyl group. That is, Z may be a hydrocarbon group substituted with a salt of a carboxyl group and a base.

It is preferred that such a hydrocarbon group substituted with a salt of a carboxyl group is a salt of a group represented by the formula: -A-C(=O)-OH (A is a direct bond or a hydrocarbon group having 1 to 40 or 1 to 10 carbon atoms, such as an alkylene group).

As the salt, ammonia, an organic amine or an alkali metal hydroxide is suitably used.

Examples of the organic amine include methylamine, ethylamine, diethylamine, dimethylethanolamine, diethanolamine, triethanolamine, and the like. Examples of the alkali metal hydroxide include sodium hydroxide, potassium hydroxide, lithium hydroxide, and the like. These bases may be used alone or in combination of two or more.

By neutralizing with a base, the dispersibility of the modified natural product in the aqueous dispersion medium is good, and an aqueous dispersion of the oil-resistant agent can be suitably obtained.

Z may be a polysiloxane group. The polysiloxane group is a group represented by, for example, the formula: -B-[-Si(R²¹)₂-O-]ₐ-[-Si(R²²)(R²¹)-O-]_{b}-A, wherein
A is -Si(R²¹)₃ or -X¹,
B is -[-(R²⁴)-O-]_{q}-R²³-[-Si(R²¹)₂-O-]ₚ- (p and q are 0 or 1),
X¹ is a linear or branched hydrocarbon group having 1 to 20 carbon atoms (or 1 to 40 carbon atoms) that may be interrupted by an oxygen atom and may have an epoxy ring, a hydroxy group, a (meth)acryl group (or an acryloyloxy group) and/or a carboxyl group,
each R²¹ independently represents a hydrogen atom, an alkyl group having 1 to 20 carbon atoms (or 1 to 40 carbon atoms), an aryl group having 6 to 20 carbon atoms (or 6 to 40 carbon atoms), or an alkoxy group having 1 to 4 carbon atoms,
each R²² independently represents a hydrogen atom, an alkyl group having 1 to 20 carbon atoms (or 1 to 40 carbon atoms), an aryl group having 6 to 20 carbon atoms (or 6 to 40 carbon atoms), or an alkoxy group having 1 to 4 carbon atoms,
R²³ represents a hydrocarbon group having 1 to 20 carbon atoms that may be interrupted by an oxygen atom,
R²⁴ represents a hydrocarbon group having 1 to 20 carbon atoms that may be interrupted by an oxygen atom, and
"a" represents an integer of 0 or more, b represents an integer of 1 or more, and (a+b) is 3 to 200.

R²¹ may have an epoxy ring, a hydroxy group, a (meth)acryl group (or acryloyloxy group), and/or a carboxyl group.
p and q are 0 or 1. It is preferred that both p and q are 0 or are 1.

The polysiloxane group may be, for example, a group represented by the formula:

-(R²⁴)-O-(R²³)-Si(R²¹)₂-O-[-Si(R²¹)₂-O-]ₐ-[-Si(R²²)(R²¹)-O-]_{b}-Si(R²¹)₃,

or

-(R²⁴)-O-(R²³)-Si(R²¹)₂-O-[-Si(R²¹)₂-O-]ₐ-[-Si(R²²)(R²¹)-O-]_{b}-X¹,

or

-(R²³)-[Si(R²¹)₂-O-]ₐ-[-Si(R²²)(R²¹)-O-]_{b}-Si(R²¹)₃,

or

- (R²¹)-[Si(R²¹)₂-O-]ₐ-[-Si(R²²)(R²¹)-O-]_{b}-X¹,

wherein
X¹ is a linear or branched hydrocarbon group having 1 to 20 carbon atoms (or 1 to 40 carbon atoms) that may be interrupted by an oxygen atom and may have an epoxy ring, a hydroxy group, a (meth)acryl group (or an acryloyloxy group) and/or a carboxyl group,
each R²¹ independently represents a hydrogen atom, an alkyl group having 1 to 20 carbon atoms, an aryl group having 6 to 20 carbon atoms, or an alkoxy group having 1 to 4 carbon atoms,
each R²² independently represents a hydrogen atom, an alkyl group having 1 to 20 carbon atoms, an aryl group having 6 to 20 carbon atoms, or an alkoxy group having 1 to 4 carbon atoms,
R²³ represents a hydrocarbon group having 1 to 20 carbon atoms,
R²⁴ represents a hydrocarbon group having 1 to 20 carbon atoms, and
"a" represents an integer of 0 or more, b represents an integer of 1 or more, and (a+b) is 3 to 200.
R²¹ and R²² may each be a hydrocarbon group having 1 to 40 carbon atoms.

Examples of X¹ include
a hydrocarbon group having 1 to 40 carbon atoms (e.g., t-butyl group),
a hydrocarbon group having 1 to 40 carbon atoms interrupted by an oxygen atom (that is, having an ether group),
a hydrocarbon group having 1 to 40 carbon atoms having an ether group and a hydroxy group,
a hydrocarbon group having 1 to 40 carbon atoms having an epoxy ring,
a hydrocarbon group having 1 to 40 carbon atoms having a hydroxy group (e.g., 1 or 2 hydroxy groups),
a hydrocarbon group having 1 to 40 carbon atoms having a (meth)acryl group (or (meth)acryloyloxy group), and
a hydrocarbon group having 1 to 40 carbon atoms having a carboxyl group.
As used herein, "(meth)acryl group" means acryl group and methacryl group.

As another example of Z as the polysiloxane group, Z may be a group represented by the formula: - (R³)₂Si-O-[-Si(R¹)₂-O-]ₐ-[-Si(R¹)(R²)-O-]_{b}-Si(R³)₃, wherein
each R¹ independently represents a hydrogen atom, an alkyl group having 1 to 20 carbon atoms, an aryl group having 6 to 20 carbon atoms, or an alkoxy group having 1 to 4 carbon atoms,
each R² independently represents a saturated hydrocarbon having 1 to 40 carbon atoms,
each R³ independently represents a hydrogen atom, an alkyl group having 1 to 20 carbon atoms, an aryl group having 6 to 20 carbon atoms, an alkoxy group having 1 to 4 carbon atoms, or a saturated hydrocarbon having 1 to 40 carbon atoms, and
"a" represents an integer of 0 or more, b represents an integer of 1 or more, and (a+b) is 3 to 200.

In the polysiloxane group (e.g., R²¹, R²², R¹, and R³), the alkyl group having 1 to 20 carbon atoms and the aryl group having 6 to 20 carbon atoms may be unsubstituted or substituted.

Specific examples of the alkyl group having 1 to 20 carbon atoms and the aryl group having 6 to 20 carbon atoms (e.g., R²¹, R²², R¹, and R³) include a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, and an octadecyl group; a cyclopentyl group, a cyclohexyl group, and a cycloheptyl group; a phenyl group, a tolyl group, a naphthyl group, or a group in which some or all of the hydrogen atoms bonding to such groups are replaced with a halogen atom, an amino group, a cyano group, and the like. R²¹, R²², R¹, and R³ are preferably a methyl group or an ethyl group.

R²¹, R²², R¹, and R³ may have an alkyl group having 3 to 22 carbon atoms or an unsaturated hydrocarbon group having 8 to 40 carbon atoms (e.g., a hydrocarbon group having an aromatic ring), but it is preferred that they do not have such a group.

In R²¹, R²², R¹, and R³, the alkoxy group having 1 to 4 carbon atoms may be linear or branched. Examples of the alkoxy group having 1 to 4 carbon atoms include a methoxy group, an ethoxy group, a propoxy group, and a butoxy group.

From the viewpoint of ease of industrial production and availability, R²¹, R²², R¹, and R³ are preferably a hydrogen atom or a methyl group, and more preferably a methyl group.

The polysiloxane group has at least one hydrocarbon group having 1 to 40 carbon atoms, and in particular a saturated hydrocarbon group.

The explanation regarding the hydrocarbon group having 1 to 40 carbon atoms in the polysiloxane group may be the same as the explanation where Z is a hydrocarbon group having 1 to 40 carbon atoms.

The hydrocarbon group may have 7 to 40 carbon atoms, for example, may have 18 to 38 carbon atoms or 23 to 36 carbon atoms. The saturated hydrocarbon group having 1 to 40 carbon atoms may be linear or branched, and is preferably an alkyl group. Specific examples of the saturated hydrocarbon group having 1 to 40 carbon atoms include a methyl group (one carbon atom), an ethyl group (two carbon atoms), a lauryl group (12 carbon atoms), a stearyl group (18 carbon atoms), a tricosyl group (23 carbon atoms), a lignoceryl group (tetracosyl group, 24 carbon atoms), a cerotyl group (hexacosyl group, 26 carbon atoms), a montanyl group (octacosyl group, 28 carbon atoms), a melissyl group (triacontane group, 30 carbon atoms), and a dotriacontane group (32 carbon atoms).
"a" is an integer of 0 or more. From the viewpoint of ease of industrial production and availability, a is preferably 40 or less, and more preferably 30 or less.

The sum of a and b is 3 to 200 or 5 to 200. From the viewpoint of ease of industrial production, availability, and ease of handling, the sum of a and b is preferably 10 to 100, and more preferably 40 to 60. "a" may be 0 to 150, for example 1 to 100. The lower limit of b may be 1 or 2 or 3, and the upper limit of b may be 150, 10, or 5.

When a or b is 2 or more, each of the plurality of R¹ and R² may be the same or different.

It is preferable that 50 mol% or more of the total of the R¹ and R² groups and the R³ group are methyl groups.

The occurrence order of the repeating units to which a or b applies is not limited to the occurrence order shown in the chemical formula, and is arbitrary. That is, the polysiloxane group may be a random polymer or a block polymer.

Examples of the polysiloxane group are as follows.

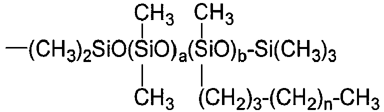

In the formula, a represents an integer from 0 to 150, b represents an integer from 1 to 150, (a+b) is 5 to 200, and n is an integer from 0 to 36.

The natural product (natural compound) is a compound that exists in nature and has at least one hydroxy group (is a hydroxy group-containing natural compound).

The natural product may be a low-molecular-weight natural product (e.g., weight average molecular weight of less than 1,000, or 500 or less) and/or a high-molecular-weight natural product. The weight average molecular weight of the high-molecular-weight natural product may be 1,000 or more, 3,000 or more, 5,000 or more, 10,000 or more, 30,000 or more, 100,000 or more, 300,000 or more, or 500,000 or more. The weight average molecular weight of the high-molecular-weight natural product may be 1,000,000 or less, 7,500,000 or less, 500,000 or less, 3,000,000 or less, 100,000 or less, 75,000 or less, or 50,000 or less. The weight average molecular weight can be measured by gel permeation chromatography (GPC) in terms of pullulan.

The natural product may be a high-molecular-weight natural product, a low-molecular-weight natural product, or a derivative thereof. The term natural product includes compounds converted from microorganisms in natural products.

Examples of the high-molecular-weight natural product include starch, cellulose, curdlan, pullulan, alginic acid, carrageenan, guar gum, chitin, and chitosan. Further examples include locust bean gum, kappa-carrageenan, iota-carrageenan, polyglycerin, isomaltodextrin, xanthan gum, gellan gum, tamarind seed gum, and cycloamylose. The high-molecular-weight natural product is preferably a high-molecular-weight natural product other than starch.

Examples of the low-molecular-weight natural product include glucose, sucrose, mannitol, sorbitol, sorbitan, maltitol, stevioside, cyclodextrin, glycerin, menthol, xylitol, glucosamine, catechin, anthocyanin, quercetin, gluconic acid, malic acid, xylose, inositol, phytic acid, menthol, sucralose, fructose, maltose, trehalose, lactosucrose, erythritol, erythritol, ascorbic acid, kojic acid, cholesterol, vanillin, lactic acid, tartaric acid, citric acid, and chlorogenic acid.

The natural product may be a compound as it is or a compound derived from a natural product. That is, the term natural product also include derivatives of natural products. Examples of starch derivatives include oxidized starch, hydrophobized starch, starch acetate, phosphate esterified starch, acetylated starch, etherified starch, cationic starch, carbamate starch, hydroxymethylated starch, hydroxyethylated starch, and hydroxypropylated starch. Examples of cellulose derivatives include hydroxypropyl cellulose, methylcellulose, carboxymethyl cellulose (CMC), cellulose monoacetate, cellulose triacetate, hydroxyethyl cellulose (HEC), hydroxypropyl methylcellulose (HPMC), hydroxyethyl methylcellulose (HEMC), cellulose TEAE (triethylamino ethylcellulose), and O-[2-hydroxy-3-(trimethylammonio)propyl]hydroxyethylcellulose chloride.

When the derivative of the natural product has high oil resistance, the derivative can be used as an oil-resistant agent without modification. That is, the derivative of the natural product may be a modified natural product (modified natural compound).

The natural product may be a monosaccharide or a polysaccharide (disaccharide, trisaccharide, etc.). Examples of the monosaccharide include glucose, galactose, fructose, aldose, alditol, ketose, pyranose, furanose, aldonic acid, uronic acid, and aldaric acid. A polysaccharide is a compound in which a plurality (3 or more, for example 3 and above) of monosaccharides such as glucose, galactose and fructose are bonded. The polysaccharide may be an oligosaccharide in which 3 to 10 monosaccharides are bound.

Specific examples of the polysaccharide include starch, cellulose, xanthan gum, karaya gum, welan gum, guar gum, pectin, tamarind gum, carrageenan, chitosan, gum arabic, locust bean gum, alginic acid, agar, dextran, pullulan, isomaltodextrin, xanthan gum, gellan gum, tamarind seed gum, curdlan, pullulan, cycloamylose, and the like.

The natural product may be starch, cellulose, curdlan, pullulan, alginic acid, carrageenan, guar gum, chitin, or chitosan, but cellulose is particularly preferred.

When the natural product is cellulose, the modified cellulose has a repeating structure represented by, for example, 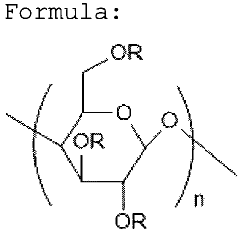 wherein at least one R group is a -Y-Z group, and the remaining R groups are hydrogen atoms; all three R groups can be - Y-Z groups; the Y group and Z group are as defined above; and n is a number of 2 or more, for example 100 or more or 500 or more.

The natural product may be, for example, aldose, alditol, ketose, pyranose, furanose, aldonic acid, uronic acid, or aldaric acid.

Aldose is a monosaccharide having the chemical formula CₘH₂ₘOₘ (m is 3 or more, the upper limit of m is generally 100, 20 or 10). Specific examples of the aldose include erythrose, threose, ribose, arabinose, xylose, lyxose, allose, altrose, glucose, mannose, gulose, idose, galactose, and talose.

Alditol is a monosaccharide in which the aldehyde group of aldose has been reduced to a hydroxymethyl group, which has 3 or more carbon atoms (the upper limit of the carbon number is generally 100, 20 or 10). Specific examples of the alditol include erythritol, threitol, ribitol, arabinitol, xylitol, arabinitol, allitol, altritol, sorbitol (glucitol), mannitol, sorbitol (glucitol), iditol, galactitol, and altritol.

Ketose is a monosaccharide containing one keto group (ketonic carbonyl group) in a chain structure (the upper limit of the number of carbon atoms is generally 100, 20 or 10). Specific examples of the ketose (specific examples having 3 to 6 carbon atoms) include dihydroxyacetone, erythrulose, ribulose, xylulose, psicose, fructose, sorbose, and tagatose.

Pyranose is a monosaccharide having a six-membered ring composed of five carbon atoms and one oxygen atom. Specific examples of the pyranose include ribopyranose, arabinopyranose, xylopyranose, lyxopyranose, allopyranose, altropyranose, glucopyranose, mannopyranose, and gulopyranose.

Furanose is a monosaccharide having a five-membered ring composed of four carbon atoms and one oxygen atom. Specific examples of the furanose include erythrofuranose, threofuranose, ribofuranose, arabinofuranose, xylofuranose, and lyxofuranose.

The modified natural compound can be produced by reacting a modifying agent with the hydroxy group of the natural product. Examples of the method for reacting with the hydroxy group include a method of forming a urethane bond, a methods of forming an ester bond, and a method of forming an ether bond.

The modifying agent is preferably a compound having a hydrocarbon group, particularly a compound having an aliphatic hydrocarbon group. Examples of the modifying agent are as follows:
an aliphatic isocyanate and/or aromatic isocyanate (Z-N=C=O),
an aliphatic isothiocyanate and/or aromatic isothiocyanate (Z-N=C=S),
a fatty acid (Z-C(=O)-OH),
an acid halogen compound (Z-C(=O)-X),
an acid anhydride (Z-[C=O]-O-[C=O]-Z),
a halogenated alkyl compound (Z-X),
an epoxy compound (Z-CHOCH₂),
an acrylate (Z-CH=CH),
an amine (Z-NH₂), and
a aliphatic alcohol (Z-OH).

In these formulas, X is a halogen atom (e.g., a chlorine atom, a bromine atom, or an iodine atom), and Z is an optionally-substituted hydrocarbon group having 1 to 40 carbon atoms, or a polysiloxane.

The substitution ratio of hydroxy groups with the modifying agent may be 1 to 100% (0.01 to 1.00). The substitution ratio is 1% or more, 3% or more, 5% or more, or 10% or more, for example, is preferably 15% or more, 20% or more, 30% or more, 40% or more, 45%, or 50% or more, and is 100% or less, 99% or less, 90% or less, or 80% or less, for example, is preferably 70% or less, 60% or less, or 50% or less. "Substitution ratio" means the proportion (%) of hydroxy groups present in the structure of the modified natural product that are substituted with the modifying agent.

The ratio of unmodified hydroxy groups (that is, the ratio of remaining hydroxyl groups) is 0% or more, 1% or more, 3% or more, 5% or more, or 7% or more, for example, may be 10% or more or 20% or more, and is 99% or less, 97% or less, or 95% or less, for example, may be 90% or less, 85% or less, 80% or less, or 70% or less.

### <Method for forming urethane bond>

A urethane bond is formed by reacting the aliphatic isocyanate and/or aromatic isocyanate (Z-NCO) with a hydroxy group. An aliphatic isothiocyanate and/or aromatic isothiocyanate (Z-N=C=S) may be used instead of or in addition to the isocyanate.

In a synthesis method of replacing the hydrogen atom of the hydroxy group of the natural product with an aliphatic isocyanate, various modifying groups (Z groups) can be introduced via the urethane bond by reacting an aliphatic isocyanate or an aromatic isocyanate with a hydroxy group-containing natural product in an organic solvent in the presence of a catalyst, such as a tin catalyst or an amine, to cause the hydrogen atom of the hydroxy group to react with the isocyanate group.

The aliphatic isocyanate is preferably a compound represented by CₙH₂ₙ₊₁-NCO (n = 1 to 40, and in particular 3 to 18). The aliphatic hydrocarbon group may be linear or branched.

Specific examples of the aliphatic isocyanate include saturated aliphatic isocyanates such as methyl isocyanate, ethyl isocyanate, propyl isocyanate, isopropyl isocyanate, butyl isocyanate, t-butyl isocyanate, pentyl isocyanate, neopentyl isocyanate, hexyl isocyanate, heptyl isocyanate, octyl isocyanate, nonyl isocyanate, decyl isocyanate, dodecyl isocyanate, and octadecyl isocyanate; and
unsaturated aliphatic isocyanates such as butenyl isocyanate, pentenyl isocyanate, hexenyl isocyanate, octenyl isocyanate and dodecenyl isocyanate.

Specific examples of the aromatic isocyanate include 4,4'-diphenylmethane diisocyanate, 2,4'-diphenylmethane diisocyanate, 2,2'-diphenylmethane diisocyanate, 2,4-toluene diisocyanate, 2,6-toluene diisocyanate, 4,4'-diphenyl ether diisocyanate, 2,2'-diphenylpropane-4,4'-diisocyanate, 3,3'-dimethyldiphenylmethane-4,4'-diisocyanate, 4,4'-diphenylpropane diisocyanate, 1,2-phenylene diisocyanate, 1,3-phenylene diisocyanate, 1,4-phenylene diisocyanate, 1,4-naphthalene diisocyanate, 1,5-naphthalene diisocyanate, and 3,3'-dimethoxydiphenyl-4,4'-diisocyanate.

In a synthesis method of replacing the hydrogen atom of the hydroxy group of the natural product with an aliphatic isothiocyanate, various modifying groups (Z groups) can be introduced via a thiourethane bond by reacting an aliphatic isocyanate or an aromatic isothiocyanate with a hydroxy group-containing natural product in an organic solvent in the presence of a catalyst, such as a tin catalyst or an amine, to cause the hydrogen atom of the hydroxy group to react with the isothiocyanate group.

The aliphatic isothiocyanate is preferably a compound represented by CₙH₂ₙ₊₁-NSO (n = 1 to 40, and in particular 3 to 18). The aliphatic hydrocarbon group may be linear or branched.

Specific examples of the aliphatic isothiocyanate include saturated aliphatic isothiocyanates such as methyl isothiocyanate, ethyl isothiocyanate, propyl isothiocyanate, isopropyl isothiocyanate, butyl isothiocyanate, pentyl isothiocyanate, hexyl isothiocyanate, heptyl isothiocyanate, octyl isothiocyanate, nonyl isothiocyanate, decyl isothiocyanate, dodecyl isothiocyanate, and octadecyl isothiocyanate; and
unsaturated aliphatic isocyanates such as butenyl isocyanate, pentenyl isocyanate, hexenyl isocyanate, octenyl isocyanate and dodecenyl isocyanate.

Specific examples of the aromatic isocyanate include 4,4'-diphenylmethane diisothiocyanate, 2,4'-diphenylmethane diisothiocyanate, 2,2'-diphenylmethane diisothiocyanate, 2,4-toluene diisothiocyanate, 2,6-toluene diisothiocyanate, 4,4'-diphenyl ether diisothiocyanate, 2,2'-diphenylpropane-4,4'-diisothiocyanate, 3,3'-dimethyldiphenylmethane-4,4'-diisothiocyanate, 4,4'-diphenylpropane diisothiocyanate, 1,2-phenylene diisothiocyanate, 1,3-phenylene diisothiocyanate, 1,4-phenylene diisothiocyanate, 1,4-naphthalene diisothiocyanate, 1,5-naphthalene diisothiocyanate, and 3,3'-dimethoxydiphenyl-4,4'-diisothiocyanate.

### <Method for forming ester bond>

An ester bond is formed by reacting a fatty acid (Z-C(=O)-OH), an acid halide (Z-C(=O)-X), and an acid anhydride (Z-[C=O]-O-[C=O]-Z) reacts with a hydroxy group.

Examples of the synthesis method for replacing the hydrogen atom of the hydroxy group of the natural product with a saturated aliphatic acyl group include a method of reacting a saturated fatty acid halide with a hydroxy group-containing natural product in the presence of a base such as pyridine, a method of reacting a mixed acid anhydride produced from a saturated fatty acid and a haloacetic acid such as trifluoroacetic acid with a hydroxy group-containing natural product, a method of reacting an anhydride of a saturated fatty acid with a hydroxy group-containing natural product, a method of reacting a saturated fatty acid with a hydroxy group-containing natural product in the presence of a sulfonate, a method of reacting a saturated fatty acid with a hydroxy group-containing natural product in the presence of a dehydration condensation agent, and the like.

The saturated fatty acid is preferably a compound represented by CₙH₂ₙ₊₁-COOH (n = 1 to 39) .

The aliphatic hydrocarbon group may be linear or branched. Specific examples of the saturated fatty acid include saturated fatty acids having 2 to 26 carbon atoms, such as acetic acid, butyric acid, caproic acid, enanthic acid, caprylic acid, pelargonic acid, capric acid, undecanoic acid, lauric acid, tridecanoic acid, myristic acid, pentadecanoic acid, palmitic acid, margaric acid, stearic acid, isostearic acid, nonadecanic acid, arachidic acid, henicosanoic acid, and behenic acid.

Specific examples of the unsaturated fatty acid include palmyric oleic acid, oleic acid, elaidic acid, vaccenic acid, erucic acid, linoleic acid, γ-linolenic acid, α-linolenic acid, eicosapentaenoic acid, docosahexaenoic acid, and lanolin fatty acid.

The acid halogen compound is preferably a compound represented by CₙH₂ₙ₊₁-CO-X (n = 1 to 39, X = Br, Cl, I). The aliphatic hydrocarbon group may be linear or branched.

Specific examples of the acid halide compound include valeroyl chloride, heptanoyl chloride, octanoyl chloride, nonanoyl chloride, laurinoyl chloride, decanoyl chloride, myristoyl chloride, tetradecanoyl chloride, heptadecanoyl chloride, undecanoyl chloride, stearoyl chloride, oleoyl chloride, palmitoyl chloride, linoleoyl chloride, and valeroyl bromide.

The acid anhydride is preferably a compound represented by (CₙH₂ₙ₊₁-CO)₂-O (n = 1 to 19 or 1 to 39). The aliphatic hydrocarbon group may be linear or branched.

The acid anhydride may form a 5-membered ring structure or a 6-membered ring structure. Specific examples of the acid anhydride forming a five-membered ring structure include succinic anhydride, methylsuccinic anhydride (4-methylsuccinic anhydride), dimethylsuccinic anhydride (4,4-dimethylsuccinic anhydride, 4,5-dimethylsuccinic anhydride, etc.), 4,4,5-trimethylsuccinic anhydride, 4,4,5,5-tetramethylsuccinic anhydride, 4-vinylsuccinic anhydride, 4,5-divinylsuccinic anhydride, phenylsuccinic anhydride (4-phenylsuccinic anhydride), 4,5-diphenylsuccinic anhydride, 4,4-diphenylsuccinic anhydride, citraconic anhydride, maleic anhydride, methylmaleic anhydride (4-methylmaleic anhydride), 4,5-dimethylmaleic anhydride, phenylmaleic anhydride (4-phenylmaleic anhydride), 4,5-diphenylmaleic anhydride, itaconic anhydride, 5-methylitaconic anhydride, 5,5-dimethylitaconic anhydride, phthalic anhydride, 3,4,5,6-tetrahydrophthalic anhydride, and the like, and analogues thereof.

Specific examples of the acid anhydride forming a 6-membered ring structure include cyclohexanedicarboxylic anhydride (cyclohexane-1,2-dicarboxylic anhydride, etc.), 4-cyclohexene-1,2-dicarboxylic anhydride, glutaric anhydride, glutaconic anhydride, 2-phenylglutaric anhydride, and the like, and analogues thereof.

### <Method for forming ether bond>

An ether bond is formed by reacting a halogenated alkyl compound (Z-X) or an epoxy compound (Z-CHOCH₂) with a hydroxy group.

Examples of the synthesis method for replacing the hydrogen atom of the hydroxy group of the natural product with an alkyl group include a method of reacting a hydroxy group-containing natural product with an alkaline aqueous solution of a halogenated alkyl compound (e.g., sodium hydroxide, potassium hydroxide), and a method of reacting a hydroxy group-containing natural product in an organic solvent in which a basic compound and an alkyl halide are dissolved. As a result, the hydrogen atom of the hydroxy group is replaced with an alkyl group.

The halogenated alkyl compound is preferably a compound represented by CₙH₂ₙ₊₁-X (n = 1 to 40, X = Cl, Br, I) .

Specific examples of the halogenated alkyl compound include methyl halide, ethyl halide, propyl halide, butyl halide, pentyl halide, hexyl halide, heptyl halide, octyl halide, nonyl halide, decyl halide, undecyl halide, dodecyl halide, tridecyl halide, tetradecyl halide, pentadecyl halide, hexadecyl halide, heptadecyl halide, octadecyl halide, nonadecyl halide, icosyl halide, heneicosyl halide, docosyl halide, tricosyl halide, and the like.

A natural product having an ether bond is obtained by reacting a hydroxy group-containing natural product (hydroxy group-containing natural compound) with an epoxy compound.

The epoxy compound is preferably a compound represented by CₙH₂ₙ₊₁-CHOCH₂ (n = 1 to 40) .

The epoxy compound is preferably a monofunctional epoxy compound having one three-membered ring ether structure. Specific examples of the epoxy compound include ethylene oxide, propylene oxide, 1-butene oxide, 2-butene oxide, stearyl glycidyl ether, cetyl glycidyl ether, and the like.

### <Substituent other than R group>

The hydrogen atom of the hydroxy group of the natural product may be replaced with an ionic substituent other than R. The ion donating group is an anionic group and/or a cationic group.

Examples of the anionic group include a monomer having a carboxyl group, a sulfonic acid group, or a phosphoric acid group.

Examples of a salt of the anionic group include an alkali metal salt, an alkaline earth metal salt, or an ammonium salt, for example, a methylammonium salt, an ethanolammonium salt, and a triethanolammonium salt.

The cationic group is an amino group, preferably a tertiary amino group or a quaternary amino group. In the tertiary amino group, the two groups bonded to the nitrogen atom may be the same or different, and are preferably an aliphatic group having 1 to 5 carbon atoms (in particular, an alkyl group), an aromatic group having 6 to 20 carbon atoms (an aryl group), or an aromatic-aliphatic group having 7 to 25 carbon atoms (in particular an aralkyl group, for example, a benzyl group (C₆H₅-CH₂-)). In the quaternary amino group, the three groups bonded to the nitrogen atom may be the same or different, and are preferably an aliphatic group having 1 to 5 carbon atoms (in particular, an alkyl group), an aromatic group having 6 to 20 carbon atoms (an aryl group), or an aromatic-aliphatic group having 7 to 25 carbon atoms (in particular an aralkyl group such as a benzyl group (C₆H₆-CH₂-)). In the tertiary amino group and the quaternary amino group, the remaining one group bonded to the nitrogen atom may have a carboncarbon double bond. The cationic group may be in the form of a salt.

The cationic group in the form of a salt is a salt with an acid (organic acid or inorganic acid). The organic acid is, for example, preferably a carboxylic acid having 1 to 20 carbon atoms (in particular, a monocarboxylic acid such as acetic acid, propionic acid, butyric acid, and stearic acid).

### <Treatment agent (oil-resistant agent)>

The treatment agent (oil-resistant agent) contains the modified natural product. The oil-resistant agent has oil resistance, and may also have water resistance, water-repellency, and oil-repellency. The oil-resistant agent may contain a liquid medium (water, an organic solvent, or a mixed solution thereof) in addition to the modified natural product. The oil-resistant agent may further contain at least one selected from a surfactant, a blocked isocyanate compound, and additives.

The amount of the modified natural product may be, with respect to the oil-resistant agent, 0.1% by weight or more, 1% by weight or more, 3% by weight or more, 5% by weight or more, 10% by weight or more, 15% by weight or more, 20% by weight or more, or 30% by weight or more. The amount of the modified natural product may be, with respect to the oil-resistant agent, 100% by weight or less, 75% by weight or less, 50% by weight or less, or 40% by weight or less.

The oil-resistant agent may contain an aqueous medium. The liquid medium is water alone, an organic solvent (e.g., alcohol, ketone, ester) alone, or a mixture of water and an organic solvent, and is preferably water alone.

With respect to the oil-resistant agent, the amount of the liquid medium may be 30% by weight or more, 50% by weight or more, 60% by weight or more, 75% by weight or more, or 90% by weight or more, and the amount of the liquid medium may be 99% by weight or less, 95% by weight or less, 75% by weight or less, or 50% by weight or less.

When the liquid medium is a mixture of water and an organic solvent, the amount of the organic solvent (e.g., alcohol, ester and ketone) may be, with respect to the liquid medium, 3% by weight or more, 10% by weight or more, 30% by weight or more, 50% by weight or more, or 75% by weight or more. The amount of organic solvent may be, with respect to the liquid medium, 90% by weight or less, 50% by weight or less, 30% by weight or less, or 10% by weight or less.

The oil-resistant agent may be a solution (in particular, an aqueous solution) or a dispersion composition (in particular, water dispersion (water dispersion composition)).

### <Surfactant or dispersant>

The oil-resistant agent may optionally contain a surfactant (emulsifier) or dispersant. In general, to stabilize the particles during the hydroxyl group substitution reaction and to stabilize the water dispersion after the reaction, a small amount of a surfactant or a dispersant (e.g., 0.01 to 100 parts by weight or 0.01 to 50 parts by weight with respect to 100 parts by weight of the natural product, e.g., 0.1 to 15 parts by weight) may be added at the time of the reaction, or, a surfactant or a dispersant may be added after the reaction.

In particular, when the treatment target is a textile product, the surfactant or dispersant in the oil-resistant agent preferably includes a nonionic surfactant. Further, the surfactant preferably includes one or more surfactants selected from a cationic surfactant, an anionic surfactant, and an amphoteric surfactant. It is preferred to use a combination of a nonionic and a cationic surfactant.

The nonionic surfactant, the cationic surfactant, and the amphoteric surfactant may each be used alone or as a combination of two or more.

The amount of the surfactant or the dispersant may be, with respect to a total of 100 parts by weight of the natural product (or modified natural product), 100 parts by weight or less, 50 parts by weight or less, 25 parts by weight or less, 15 parts by weight or less, 10 parts by weight or less, 7.5 parts by weight or less, 5 parts by weight or less, or 2.5 parts by weight or less. In general, the addition of a surfactant or a dispersant improves the stability of the water dispersion and penetration into the fabric.

### <Blocked isocyanate compound>

The oil-resistant agent may optionally contain a blocked isocyanate compound. The blocked isocyanate compound may be added before the hydroxyl group substitution reaction, or after the reaction (for example, before the curing step).

The blocked isocyanate compound can be produced by reacting an isocyanate (which may be a compound represented by A(NCO)ₘ, where A is the group remaining after the isocyanate group is removed from the isocyanate compound, and m is an integer of 2 to 8) with a blocking agent (RH, where R is a hydrocarbon group optionally substituted with a heteroatom such as a nitrogen atom or an oxygen atom, and H is a hydrogen atom).

A(NCO)ₘ is, for example, tolylene diisocyanate (TDI), diphenylmethane diisocyanate (MDI), hexamethylene diisocyanate (HDI), or the like. Examples of the blocking agent forming the R group include an oxime, a phenol, an alcohol, a mercaptan, an amide, an imide, an imidazole, a urea, an amine, an imine, a pyrazole, and an active methylene compound.

As the blocked isocyanate compound, a blocked isocyanate such as oxime-blocked toluene diisocyanate, blocked hexamethylene diisocyanate, and blocked diphenylmethane diisocyanate is preferred.

The amount of the blocked isocyanate compound may be, with respect to 100 parts by weight of the modified natural product, 15 parts by weight or less, 10 parts by weight or less, 7.5 parts by weight or less, 5 parts by weight or less, or 2.5 parts by weight or less.

### <Additives>

The oil-resistant agent may contain additives. Examples of the additives include a binder resin, a dispersant, a water resistant agent, an oil-resistant agent, a water-repelling agent, an oil-repelling agent, a drying rate adjuster, a cross-linking agent, a film formation agent, a compatibilizer, an antifreezing agent, a viscosity regulator, a UV absorber, an antioxidant, a pH adjuster, an antifoaming agent, a texture modifier, a slippage modifier, an antistatic agent, a hydrophilizing agent, an antibacterial agent, a preservative, an insect repellent, a fragrant agent, a flame retarder, a sizing agent, and a paper strength agent. The amount of the additives may be 0.1 to 20 parts by weight, for example 0.1 to 10 parts by weight, with respect to 100 parts by weight of the modified natural product.

### <Properties of oil-resistant agent and modified natural product>

The modified natural product (or oil-resistant agent) has a contact angle (on glass substrate) of n-hexadecane of 5° or more, 10° or more, 11° or more, 12° or more, or 15° or more, preferably 20° or more, 25° or more, or 30° or more, and more preferably 35° or more, 40° or more, or 45° or more. The contact angle of n-hexadecane is preferably in the above range because the oil-resistant agent has excellent liquid repellency, in particular oil resistance and the like.

The surface free energy of the modified natural product is preferably 20 mNm⁻¹ or more, 25 mNm⁻¹ or more, or 30 mNm⁻¹ or more, and is preferably 70 mNm⁻¹ or less, 60 mNm⁻¹ or less, or 50 mNm⁻¹ or less.

The preferred range of the difference between the SP value of the modified natural product (or oil-resistant agent) and corn oil may be 3 or more, 5 or more, or 7 or more.

The melting point of the modified natural product is preferably 40°C or higher, 50°C or higher, 60°C or higher, 70°C or higher, 80°C or higher, 90°C or higher, 100°C or higher, 110°C or higher, 120°C or higher, or 140°C or higher. Further, the melting point of the oil-resistant agent is preferably 200°C or lower, 180°C or lower, or 160°C or lower.

The melting point of the oil-resistant agent is preferably in the above range because the coatability and temperature resistance, in particular oil resistance and the like, when treated on a textile product are better.

The glass transition temperature of the modified natural product is preferably 30°C or higher, 40°C or higher, 50°C or higher, 60°C or higher, 70°C or higher, 80°C or higher, 90°C or higher, 100°C or higher, 110°C or higher, 120°C or higher, or 140°C or higher. Further, the glass transition temperature of the modified natural product is preferably 180°C or lower, 140°C or lower, 130°C or lower, or 120°C or lower. The glass transition temperature of the modified natural product is preferably in the above range because the coatability and temperature resistance, in particular oil resistance and the like, when treated on a textile product are better.

The viscosity of the oil-resistant agent at a polymer (modified natural product) solution concentration of 14.8 mg/mL is preferably 3 cP or more, 5 cP or more, 7 cP or more, or 10 cP or more. Further, the viscosity of the oil-resistant agent at a polymer solution concentration of 14.8 mg/mL is preferably 1,000 cP or less, 500 cP or less, or 100 cP or less. The viscosity of the oil-resistant agent in the polymer solution is preferably in the above range because the coatability, in particular oil resistance and the like, when treated on a textile product are better.

The air permeance of the treated paper is preferably 100 s/100 cc or more, 200 s/100 cc or more, 300 s/100 cc or more, 400 s/100 cc or more, 500 s/100 cc or more, 700 s/100 cc or more, or 1,000 s/100 cc or more. If the air permeance of the treated paper is above those values, the voids between the fibers may be closed, and the in particular oil resistance may be improved. The treated paper for measuring air permeance is prepared by coating the oil-resistant agent at a polymer (modified natural product) solution concentration of 14.8 mg/mL on a sheet of paper having a basis weight of 45 g/m² and a paper density of 0.58 g/cm³, drying the sheet of paper, repeating this coating and drying process three times, and then annealing at 70°C to 180°C (for example, 70°C) for 10 minutes.

A preferred range of the combination of hexadecane contact angle and air permeance may be 5 degrees or more × 200 s or more, 10 degrees or more × 200 s or more, 30 degrees or more × 200 s or more, or 40 degrees or more × 200 s or more. Alternatively, a preferred range of the combination of hexadecane contact angle and air permeance may be 11 degrees or more × 250 s or more, 15 degrees or more × 250 s or more, 30 degrees or more × 250 s or more, or 40 degrees or more × 250 s or more. Another preferred range of the combination of hexadecane contact angle and air permeance may be 11 degrees or more × 300 s or more, 15 degrees or more × 300 s or more, 30 degrees or more × 300 s or more, or 40 degrees or more × 300 s or more. Another preferred range of the combination of hexadecane contact angle and air permeance may be 11 degrees or more × 350 s or more, 15 degrees or more × 350 s or more, 30 degrees or more × 350 s or more, or 40 degrees or more × 350 s or more.

The product of the hexadecane contact angle and air permeance is preferably 1,500 (degrees/s) or more, 2,000 (degrees/s) or more, 2,500 (degrees/s) or more, 3,000 (degrees/s) or more, 3,500 (degrees/s) or more, 4,000 (degrees/s) or more, 5,000 (degrees/s) or more, 6,000 (degrees/s) or more, 7,000 (degrees/s) or more, 8,000 (degrees/s) or more, 9,000 (degrees/s) or more, or 10,000 (degrees/s) or more. The upper limit of the product of the hexadecane contact angle and the air permeance may be 300,000 (degrees/s), 200,000 (degrees/s), or 100,000 (degrees/s). The fact that the product of the hexadecane contact angle and the air permeance is equal to or greater than the above value means that either the liquid repellency or the coatability of the oil-resistant agent is sufficient to develop oil resistance.

### <Applications of modified natural product>

The modified natural product can be used as various agents, such as an oil-resistant agent, a water resistant agent, a water-repelling agent, an oil-repelling agent, a soil resistant agent, a soil release agent, a release agent, or a mold release agent, or a component of such agents. The modified natural product can be used as an external treatment agent (surface treatment agent) or an internal treatment agent, or as a component thereof.

By treating the substrate with the modified natural product, the modified natural product can form a surface coating structure on the substrate surface.

The treatment target (substrate) is dried and preferably heated at a temperature higher than the Tg of the modified natural product, for example, 100°C to 200°C, in order to develop liquid repellency. Treating at a temperature equal to or higher than the Tg of the modified natural product causes the side chains of the modified natural product coated on the surface of the substrate to align. As a result, a surface coating structure with excellent hydrophobicity can be formed.

The surface coating structure can be formed by applying the modified natural product as a treatment target (substrate) so as to be attached to the substrate surface by a conventionally known method. Usually, the modified natural product is diluted by dispersing in an organic solvent or water, then attached to the surface of the treatment target by a known method such as dip coating, spray coating, foam coating, and the like, and dried. Further, if necessary, the modified natural product may be applied together with a suitable cross-linking agent (e.g., a blocked isocyanate compound) and cured. In addition, an insect repellent, a softening agent, an antibacterial agent, a flame retarder, an antistatic agent, a coating material fixing agent, a wrinkle resistant agent, a sizing agent, a paper strength agent, and the like can be added and used together with the modified natural product.

Examples of the treatment target to be treated with an agent containing the modified natural product include textile products, stone, filters (e.g., electrostatic filters), dust masks, fuel cell components (e.g., gas diffusion electrodes and gas diffusion supports), glass, wood, leather, fur, asbestos, brick, cement, metals and oxides, ceramic products, plastics, painted surfaces, plaster, and the like.

Examples of textile products include various types of products, such as cloth products and paper products.

Examples of cloth products include animal and plant natural fibers such as cotton, hemp, wool and silk, synthetic fibers such as polyamide, polyester, polyvinyl alcohol, polyacrylonitrile, polyvinyl chloride and polypropylene, semi-synthetic fibers such as rayon and acetate, inorganic fibers such as glass fibers, carbon fibers, asbestos fibers, or mixed fibers thereof. Cloth products include woven, knitted, and nonwoven fabric, cloth in the form of clothing, and carpets. The fibers, yarns, and intermediate textile products (e.g., slivers or rovings, etc.) in pre-cloth form may be treated.

Examples of paper products include bleached or unbleached chemical pulp such as kraft pulp or sulfite pulp, high-yield bleached or unbleached pulp such as groundwood pulp, mechanical pulp, or thermomechanical pulp, paper made of old paper pulp such as old newspapers, old magazines, old corrugated board, deinked old paper, a container made of paper, a formed article made of paper, and the like. Specific examples of paper products include food packaging paper, gypsum board base paper, coated base paper, medium-quality paper, general liners and cores, neutral pure white roll paper, neutral liner, anti-rust liner and metal interleaving paper, kraft paper, neutral printing and writing paper, neutral coated base paper, neutral PPC paper, neutral heat-sensitive paper, neutral pressure-sensitive base paper, neutral inkjet paper, neutral information paper, molded paper (molded container), and the like. Since the modified natural product of the present disclosure has excellent oil resistance (e.g., high-temperature oil resistance), the modified natural product of the present disclosure may be suitably used for applications requiring oil resistance, in particular food packaging materials and food containers.

The modified natural product can be applied to fibrous substrates (e.g., textile products, etc.) by any method known for treating textile products with liquids. When the textile product is cloth, the cloth may be immersed in the solution, or the solution may be attached or sprayed onto the cloth. The treatment may be an external addition treatment or an internal addition treatment. When the textile product is paper, the modified natural product may be coated on the paper, or a solution thereof may be attached or sprayed onto the paper, or a solution thereof may be mixed with a pulp slurry prior to papermaking. The treatment may be an external addition treatment or an internal addition treatment.

The modified natural product may be applied to a pre-formed textile product (in particular paper, cloth, etc.) or may be applied at various stages of papermaking, for example during the drying of the paper. The modified natural product may be applied to the textile product by a cleaning method, such as in a washing application or a dry cleaning method.

Alternatively, the fibrous substrate may be leather. In order to make the leather hydrophobic and oleophobic, the modified natural product may be applied to the leather from an aqueous solution or an aqueous emulsion at various stages of leather processing, for example during the wet processing of the leather or during the finishing of the leather.

The modified natural product can also be used as an external mold release agent. For example, the surface of a substrate can be easily peeled off from another surface (another surface of the substrate or a surface on another substrate).

In the case of paper products, for example, a natural modifier solution may be sprayed onto molded pulp and dried by heating.

Alternatively, a natural modifier dispersed with an emulsifier or the like may be mixed in a pulp slurry solution, then water may be removed, and molding and thermal pressing may be carried out. A cross-linking agent, a paper strength agent, a fixing agent, and the like may be added to the pulp slurry.

Alternatively, the paper may be immersed in a natural modifier dispersion solution and dried by heating.

In the case of cloth products, the cloth may be immersed in or sprayed with the natural modifier dispersion solution, water may be removed, and then drying carried out by heating.

As used herein, "treatment" means applying a treatment agent onto a treatment target by immersion, spraying, coating, or the like. As a result of the treatment, the modified natural product, which is the active ingredient of the treatment agent, penetrates into the treatment target and/or attaches to the surface of the treatment target.

### <Paper additive>

The modified natural product can be suitably used as a paper additive. A paper additive including the modified natural product can be used as a water resistant agent, an oil-resistant agent, a water repellant, and/or an oil repellant. The paper additive is preferably in the form of a solution (in particular, a solution in an organic solvent), an emulsion (in particular, an aqueous emulsion), or an aerosol. The paper additive includes the modified natural product and a medium (for example, a liquid medium such as an organic solvent or water). The paper additive is preferably a water dispersion of the modified natural product. The concentration of the modified natural product in the paper additive may be, for example, 0.01 to 50% by weight. The paper additive may be free of a surfactant.

The organic solvent contained in the paper additive can be removed by heating the modified natural product solution (preferably under reduced pressure) (e.g., to 30°C or higher, for example 50 to 120°C).

The paper additive can be used to treat (for example, a surface treatment) a paper substrate. The paper additive can be applied to the treatment target by a conventionally known method. Generally, the paper additive is diluted by dispersing it in an organic solvent or water, and then attached to the surface of the treatment target by a known method such as immersion coating, spray coating, or foam coating and dried (surface treatment). Examples of the paper substrate of the treatment target include paper, containers made of paper, formed articles made of paper (for example, molded pulp), and the like. The modified natural product of the present disclosure attaches well to paper substrates. As used herein, "attach" refers to physical bonding or chemical bonding. Oil-resistant paper is obtained by attaching the modified natural product to the paper substrate.

While various embodiments have been described above, it should be understood that various modifications in the form and details can be made without departing from the spirit and scope of the claims.

### Examples

Next, the present disclosure will be described in detail with the following examples. However, these explanations do not limit the present disclosure. In the following, "parts", "%", and "ratio" refer to "parts by weight", "% by weight", and "weight ratio", unless otherwise stated.

The test methods used below are as follows.

### Preparation of treated paper

As a wood pulp, a pulp slurry was prepared in which the weight ratios of LBKP (broadleaf bleached kraft pulp) and NBKP (softwood bleached kraft pulp) were 60% by weight and 40% by weight, and the freeness of the pulp was 400 ml (Canadian Standard Freeness). A wet paper strength agent and a sizing agent were added to the pulp slurry. Paper having a paper density of 0.58 g/cm³ and a basis weight of 45 g/m² was used as the base paper for an external addition treatment (size press treatment) with a Fourdrinier machine. This base paper had an oil resistance (KIT value) of 0 and a water resistance (Cobb value) of 52 g/m².

Treated paper was prepared by coating a 14.8 mg/cm³ polymer solution (chloroform, toluene, or acetone) on the base paper using a Baker applicator with a gap set to 0 mil, drying the base paper, repeating this coating and drying process three times, and then annealing at 70°C for 10 minutes.

### KIT test (oil resistance)

Measured using a 3M kit test (TAPPI T-559cm-02). In the 3M kit test method, a test oil containing castor oil, toluene, and heptane was placed on the surface of the treated paper, after 15 seconds the test oil was wiped off, and oil resistance was evaluated based on the presence or absence of an oil stain on the treated paper. The test was performed using test oils having kit numbers 1 to 6. The highest kit number that did not show staining was taken as the evaluation result of oil resistance.

### Corn oil resistance evaluation (oil resistance)

Corn oil was placed on the surface of the treated paper, the test oil was wiped off after 15 seconds, and oil resistance was evaluated based on the presence or absence of an oil stain on the treated paper. When there was no stain, an evaluation of "o" was given, and when there was a stain, an evaluation of "×" was given.

### Liquid repellency (static contact angle)

For the liquid repellency, a solution of modified natural product with a solid content concentration of 1.0% was spin-coated on a glass substrate with a cellophane film laminated, and the static contact angle was measured. The static contact angle was obtained by dropping 2 µL of hexadecane (HD) onto a coating film and measuring the contact angle one second after the drop was applied.

### Air permeance

The air permeance (air impermeability) of the treated paper was measured according to JIS P8117 (2009) using an automatic Gurley-type densitometer (Model No. 323-AUTO, vent hole diameter 28.6 ± 0.1 mm) manufactured by Yasuda Seiki Seisakusho Ltd.

### Substitution ratio

The substitution ratio of the oil-resistant agent was determined by ¹H NMR or elemental analysis.

### Example 1

A stirrer, 4.0 g of cellulose (20 um powder), and 4.0 g of LiCl were placed in a reaction container equipped with a reflux condenser and a nitrogen inlet tube, and dried under reduced pressure at 80°C for 4 hours. The mixture was charged with 40 mL of dimethylformamide, and stirred at 150°C for 1 hour. After that, the temperature was returned to room temperature, and 0.1 g of dibutyltin dilaurate was added. The temperature was changed to 120°C, 22.2 g of octadecyl isocyanate (3 equivalents with respect to the OH of the repeating unit) and 10 mL of dimethylformamide were added, and the mixture was stirred for 12 hours. After confirming the disappearance of the octadecyl isocyanate by ¹H NMR, the reaction container was cooled to room temperature, and the reaction mixture was added dropwise to water to precipitate a solid. The precipitated solid was collected by suction filtration, washed once with methanol, and washed once with acetone. The collected solid was reprecipitated using chloroform as a good solvent and hexane as a poor solvent to obtain a derivative of cellulose modified with octadecyl isocyanate as an oil-resistant agent. The substitution ratio of the derivative was 100%. Using this derivative, liquid repellency, KIT test, corn oil resistance, and air permeability were evaluated. The results are shown in Table 1.

### Example 2

A stirrer and 1.6 g of hydroxypropyl cellulose (molecular weight: 80,000) synthesized from cellulose were placed in a reaction container equipped with a reflux condenser and a nitrogen inlet tube, and dried under reduced pressure at 80°C for 4 hours. The mixture was charged with 25 mL of chloroform, and stirred at 60°C for 1 hour. After that, 0.1 g of dibutyltin dilaurate was added, 4.4 g of octadecyl isocyanate (3 equivalents with respect to the OH of the repeating unit) and 5 mL of chloroform were added, and the mixture was stirred at 60°C for 7 hours. After confirming the disappearance of the octadecyl isocyanate by ¹H NMR, the reaction container was cooled to room temperature, the reaction mixture was concentrated with a rotary evaporator, reprecipitation was performed using ethyl acetate as a poor solvent, and a derivative of hydroxypropyl cellulose modified with octadecyl isocyanate was obtained as an oil-resistant agent. The substitution ratio of the derivative was 100%. Using this derivative, liquid repellency, KIT test, corn oil resistance and air permeance were evaluated. The results are shown in Table 1.

### Example 3

Using cellulose acetate synthesized from cellulose (1.14 eq modified product, substitution ratio: 38%) as an oil-resistant agent, liquid repellency, KIT test, corn oil resistance, and air permeance were evaluated. The results are shown in Table 1.

### Comparative Example 1

Using cellulose (20 um Powder) as an oil-resistant agent, liquid repellency, KIT test, corn oil resistance, and air permeance were evaluated. The results are shown in Table 1.

### Comparative Example 2

Using polyglycerin (average molecular weight of 500) as an oil-resistant agent, when liquid repellency was evaluated, the KIT test was 0 points, corn oil resistance was a "×", and air permeance was 136 s/100 cc.

### Example 4

A stirrer, 5.0 g of polyglycerin (average molecular weight of 500), 20 mL of pyridine, and 25 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of polyglycerin modified with octadecyl isocyanate as an oil-resistant agent. The substitution ratio of the derivative was 100%. The liquid repellency evaluation of this oil-resistant agent was 4 points in the KIT test, the corn oil resistance was "o", and the air permeance was 289 s/100 cc.

### Example 5

A derivative was obtained in the same manner as in Example 4, except that 12 g of octadecyl isocyanate was used.

The substitution ratio of the derivative was 54%. The liquid repellency evaluation of this oil-resistant agent was 4 points in the KIT test, the corn oil resistance was "o", and the air permeance was 232 s/100 cc.

### Example 6

0.1 g of the derivative obtained in Example 5 was mixed with 0.1 g of polyoxyethylene oleyl ether and 9.8 g of water to form an emulsion, which was then coated in the same way as in Example 4. The liquid repellency evaluation of this oil-resistant agent was 4 points in the KIT test, the corn oil resistance was "o", and the air permeance was 185 s/100 cc.

### Example 7

A derivative was obtained in the same manner as in Example 4, except that 6.3 g of octadecyl isocyanate was used.

The substitution ratio of the derivative was 25%. The liquid repellency evaluation of this oil-resistant agent was 5 points in the KIT test, the corn oil resistance was "o", and the air permeance was 231 s/100 cc.

### Example 8

A derivative was obtained in the same manner as in Example 4, except that the octadecyl isocyanate was changed to 6.2 g of octadecyl isocyanate and 4.5 g of dodecyl isocyanate.

The substitution ratio of the derivative was 100%. The liquid repellency evaluation of this oil-resistant agent was 4 points in the KIT test, the corn oil resistance was "o", and the air permeance was 224 s/100 cc.

### Example 9

A stirrer, 2.5 g of polyglycerin (average molecular weight of 750), 20 mL of pyridine, and 10.6 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of polyglycerin modified with octadecyl isocyanate as an oil-resistant agent. The substitution ratio of the derivative was 100%. The liquid repellency evaluation of this oil-resistant agent was 4 points in the KIT test, the corn oil resistance was "o", and the air permeance was 286 s/100 cc.

### Example 10

A stirrer, 2.5 g of polyglycerin (average molecular weight of 750), 20 mL of pyridine, and 0.89 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the solvent was removed to obtain a derivative of polyglycerin modified with octadecyl isocyanate as an oil-resistant agent. The substitution ratio of the derivative was 8%. The liquid repellency evaluation of this oil-resistant agent was 5 points in the KIT test, the corn oil resistance was "o", and the air permeance was 277 s/100 cc.

### Example 11 (MS379P)

The compound obtained in Example 10 was coated as a 1% aqueous solution. The liquid repellency evaluation of this oil-resistant agent was 5 points in the KIT test, the corn oil resistance was "o", and the air permeance was 269 s/100 cc.

### Example 12

A stirrer, 2.5 g of polyglycerin (average molecular weight of 750), 20 mL of pyridine, and 0.44 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the solvent was removed to obtain a derivative of polyglycerin modified with octadecyl isocyanate as an oil-resistant agent. The substitution ratio of the derivative was 4%.

The compound was coated as a 1% aqueous solution. The liquid repellency evaluation of this oil-resistant agent was 3 points in the KIT test, the corn oil resistance was "o", and the air permeance was 225 s/100 cc.

### Example 13

A stirrer, 0.46 g of glycerin, 10 mL of pyridine, and 4.4 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of glycerin modified with octadecyl isocyanate as an oil-resistant agent. The substitution ratio of the derivative was 100%. The liquid repellency evaluation of this oil-resistant agent was 4 points in the KIT test and the corn oil resistance was "o".

### Example 14

A stirrer, 0.92 g of glycerin, 10 mL of pyridine, and 4.4 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of glycerin modified with octadecyl isocyanate as an oil-resistant agent. The substitution ratio of the derivative was 50%. The liquid repellency evaluation of this oil-resistant agent was 4 points in the KIT test and the corn oil resistance was "o".

### Example 15

A stirrer, 1.7 g of diglycerin, 20 mL of pyridine, and 11.8 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of diglycerin modified with octadecyl isocyanate as an oil-resistant agent. The substitution ratio of the derivative was 100%. The liquid repellency evaluation of this oil-resistant agent was 4 points in the KIT test and the corn oil resistance was "o".

### Example 16

A stirrer, 1.7 g of diglycerin, 20 mL of pyridine, and 3.0 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was added dropwise to hexane to precipitate a solid. The precipitated solid was collected by suction filtration to obtain a derivative of diglycerin modified with octadecyl isocyanate as an oil-resistant agent. The substitution ratio of the derivative was 25%. The liquid repellency evaluation of this oil-resistant agent was 4 points in the KIT test and the corn oil resistance was "o".

### Example 17

A stirrer, 0.5 g of maltitol, 15 mL of DMSO, and 4.0 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and water to obtain a derivative of maltitol modified with octadecyl isocyanate as an oil-resistant agent. The substitution ratio of the derivative was 100%. The liquid repellency evaluation of this oil-resistant agent was 4 points in the KIT test, the corn oil resistance was "o", and the air permeance was 1,243 s/100 cc.

### Example 18

A derivative of maltitol modified with octadecyl isocyanate was obtained in the same manner as in Example 17, except that the octadecyl isocyanate was changed to 2.0 g. The substitution ratio of the derivative was 60%. The liquid repellency evaluation of this oil-resistant agent was 3 points in the KIT test, the corn oil resistance was "o", and the air permeance was 400 s/100 cc.

### Example 19

A stirrer, 1.8 g of sorbitol, 20 mL of DMF, and 18 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and acetone to obtain a derivative of sorbitol modified with octadecyl isocyanate as an oil-resistant agent. The substitution ratio of the derivative was 100%. The liquid repellency evaluation of this oil-resistant agent was 5 points in the KIT test and the corn oil resistance was "o".

### Example 20

A stirrer, 1.8 g of sorbitol, 20 mL of DMF, and 8.9 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and acetone to obtain a derivative of sorbitol modified with octadecyl isocyanate as an oil-resistant agent. The substitution ratio of the derivative was 50%. The liquid repellency evaluation of this oil-resistant agent was 5 points in the KIT test, the corn oil resistance was "o", and the air permeance was 729 s/100 cc.

### Example 21

A stirrer, 1.8 g of sorbitol, 20 mL of DMF, and 4.4 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and acetone to obtain a derivative of sorbitol modified with octadecyl isocyanate as an oil-resistant agent. The substitution ratio of the derivative was 25%. The liquid repellency evaluation of this oil-resistant agent was 5 points in the KIT test, the corn oil resistance was "o", and the air permeance was 449 s/100 cc.

### Example 22

A stirrer, 1.8 g of sorbitol, 20 mL of DMF, and 2.9 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and acetone to obtain a derivative of sorbitol modified with octadecyl isocyanate as an oil-resistant agent. The substitution ratio of the derivative was 16%. The liquid repellency evaluation of this oil-resistant agent was 4 points in the KIT test, the corn oil resistance was "o", and the air permeance was 897 s/100 cc.

### Example 23

A stirrer, 1.8 g of sorbitol, 20 mL of pyridine, and 9.1 g of C17H35COCl were added to a reaction container, and the mixture was stirred overnight at 60°C. The mixture was washed with hexane and acetone to obtain a derivative of sorbitol modified with C₁₇H₃₅COCl as an oil-resistant agent.

The substitution ratio of the derivative was 50%. The liquid repellency evaluation of this oil-resistant agent was 4 points in the KIT test and the corn oil resistance was "o".

### Example 24

A stirrer, 1.8 g of mannitol, 20 mL of DMF, and 8.9 g of octadecyl isocyanate were added to a reaction container, 1 drop of dibutyltin dilaurate was added, and the mixture was stirred at 60°C for 1 hour. After confirming the disappearance of the octadecyl isocyanate by ¹H NMR, the mixture was washed with hexane and acetone to obtain a derivative of mannitol modified with octadecyl isocyanate as an oil-resistant agent. The substitution ratio of the derivative was 50%. The liquid repellency evaluation of this oil-resistant agent was 5 points in the KIT test and the corn oil resistance was "o".

### Example 25

A stirrer, 0.40 g of dextrin, and 10 mL of DMSO were added to a reaction container, and the mixture was heated to 60°C to dissolve the dextrin. After that, 1 drop of dibutyltin dilaurate was added, 2.2 g of octadecyl isocyanate and 2 ml of CHCl3 were added, and the mixture was stirred at 60°C. The solid was recovered with a poor solvent to obtain a derivative. The substitution ratio of the derivative was 70%. The liquid repellency evaluation of this oil-resistant agent was 3 points in the KIT test, the corn oil resistance was "o", and the air permeance was 1281.7 s/100 cc.

### Example 26

Using decaglycerol tristearyl ester as an oil-resistant agent, liquid repellency, KIT test, corn oil resistance, and air permeance were evaluated. The HD contact angle of the oil-resistant agent was 41.1°, the KIT test score was 4 points, the corn oil resistance "o", and the air permeance was 252.1 s/100 cc.

### Example 27

Using hexaglycerol tristearyl ester as an oil-resistant agent, liquid repellency, KIT test, corn oil resistance, and air permeance were evaluated. The HD contact angle of the oil-resistant agent was 40.6°, the KIT test score was 4 points, the corn oil resistance "o", and the air permeance was 230.4 s/100 cc.

### Example 28

Using hexaglycerol pentastearyl ester as an oil-resistant agent, liquid repellency, KIT test, corn oil resistance, and air permeance were evaluated. The HD contact angle of the oil-resistant agent was 41.9°, the KIT test score was 4 points, the corn oil resistance "o", and the air permeance was 230.6 s/100 cc.

### Example 29

Using decaglycerol heptabehenyl ester as an oil-resistant agent, liquid repellency, KIT test, corn oil resistance, and air permeance were evaluated. The HD contact angle of the oil-resistant agent was 40.5°, the KIT test score was 5 points, the corn oil resistance "o", and the air permeance was 604.0 s/100 cc.

### Example 30

Using decaglycerol decabehenyl ester as an oil-resistant agent, liquid repellency, KIT test, corn oil resistance, and air permeance were evaluated. The HD contact angle of the oil-resistant agent was 40.5°, the KIT test score was 5 points, the corn oil resistance "o", and the air permeance was 236.6 s/100 cc.

### Example 31

Using hexaglycerol monostearyl ester as an oil-resistant agent, liquid repellency, KIT test, corn oil resistance, and air permeance were evaluated. The HD contact angle of the oil-resistant agent was 41.1°, the KIT test score was 5 points, the corn oil resistance "o", and the air permeance was 237.6 s/100 cc.

### Example 32

5.8 g of lanolin fatty acid was mixed with 30 ml of pyridine, and the mixture was heated to 50°C. The mixture was then charged with 8.85 g of BOP reagent, after 1 hour 0.46 g of glycerin was added, and the resultant mixture was heated overnight. The resultant solid was washed with dilute hydrochloric acid and acetone, and subjected to suction filtration to obtain a derivative of glycerin modified with lanolin fatty acid as an oil-resistant agent. The substitution ratio of the derivative was 100%. The oil resistance of this oil-resistant agent was evaluated as 3 points in the KIT test.

### Example 33

4.35 g of carboxylic acid-modified polyorganosiloxane (functional group equivalent: 1,450 g/mol), 10 ml of pyridine, and 1.77 g of BOP reagent were stirred for 1 hour, the mixture was charged with 4.35 g of glycerin, and stirred at 60°C for one day. After cooling, the product was extracted with chloroform, washed with water, and the solvent was distilled off. A derivative modified with carboxylic acid-modified polyorganosiloxane was obtained. The substitution ratio of this derivative was 100%. The oil resistance of this oil-resistant agent was evaluated as 3 points in the KIT test.

The results of Examples 1 to 33 and Comparative Examples 1 and 2 are shown in Table 1.

**[Table 1]**

| | Oil Resistance | | Liquid Repellency | Air Permeance (s/100cc) |
|---|---|---|---|---|
| | KIT Points | Corn Oil | HD Contact Angle (°) | |
| Example 1 | 6 | ○ | 44.0 | 4519 |
| Example 2 | 4 | ○ | 41.4 | 1113 |
| Example 3 | 4 | ○ | 11.2 | 6840 |
| Example 4 | 4 | ○ | 43.3 | 289 |
| Example 5 | 4 | ○ | 41.8 | 232 |
| Example 6 | 4 | ○ | - | 185 |
| Example 7 | 5 | ○ | 42.9 | 231 |
| Example 8 | 4 | ○ | 39.4 | 224 |
| Example 9 | 4 | ○ | 42.6 | 226 |
| Example 10 | 5 | ○ | 42.5 | 278 |
| Example 11 | 5 | ○ | 43.1 | 269 |
| Example 12 | 3 | ○ | 43.5 | 225 |
| Example 13 | 4 | ○ | 45.3 | 762 |
| Example 14 | 4 | ○ | 44.4 | 754 |
| Example 15 | 4 | ○ | 44.4 | 294 |
| Example 16 | 3 | ○ | 43.6 | 277 |
| Example 17 | 4 | ○ | 43.3 | 1243 |
| Example 18 | 3 | ○ | 42.7 | 400 |
| Example 19 | 4 | ○ | - | - |
| Example 20 | 5 | ○ | 42.3 | 729 |
| Example 21 | 5 | ○ | 44.9 | 449 |
| Example 22 | 4 | ○ | 42.4 | 897 |
| Example 23 | 4 | ○ | 44.5 | - |
| Example 24 | 5 | ○ | 41.2 | - |
| Example 25 | 3 | ○ | 41.4 | 1282 |
| Example 26 | 4 | ○ | 41.1 | 252 |
| Example 27 | 4 | ○ | 40.6 | 230 |
| Example 28 | 4 | ○ | 41.9 | 231 |
| Example 29 | 5 | ○ | 40.5 | 604 |
| Example 30 | 5 | ○ | 40.5 | 237 |
| Example 31 | 5 | ○ | 41.1 | 238 |
| Example 32 | 3 | - | 40.1 | - |
| Example 33 | 3 | - | 39.4 | - |
| Comparative Example 1 | 0 | × | - | 255 |
| Comparative Example 2 | 0 | × | 10.1 | 136 |

### Industrial Applicability

The modified natural product of the present disclosure can be used as an oil-resistant agent, a water resistant agent, a water-repelling agent, an oil-repelling agent, a soil resistant agent, a soil release agent, a release agent, or a mold release agent, and in particular as an oil-resistant agent. The modified natural product can be suitably used for applications requiring oil resistance, in particular food applications such as food packaging materials and food containers.

## Claims

1. An oil-resistant agent comprising a modified natural product having at least one hydroxy group, wherein a hydrogen atom of the hydroxy group of the natural product is replaced with an R group represented by:
-Y-Z
wherein Y is a direct bond, -C(=O)-, -C(=O)-NR'-, or -C(=S)-NR'-, where R' is a hydrogen atom or an alkyl group having 1 to 4 carbon atoms, and
Z is an optionally-substituted hydrocarbon group having 1 to 40 carbon atoms, or a polysiloxane.

2. The oil-resistant agent according to claim 1, wherein the natural product is a natural product other than starch.

3. The oil-resistant agent according to claim 1 or 2, wherein the natural product is a compound of a natural product as is or a compound derived from a natural product.

4. The oil-resistant agent according to any of claims 1 to 3, wherein the natural product is a monosaccharide, a polysaccharide, glycerin, or polyglycerin.

5. The oil-resistant agent according to any of claims 1 to 4, wherein
the natural product is at least one selected from a high-molecular-weight natural product and a low-molecular-weight natural product,
the high-molecular-weight natural product is at least one selected from cellulose, curdlan, pullulan, alginic acid, carrageenan, guar gum, chitin, chitosan, locust bean gum, kappa-carrageenan, iota-carrageenan, polyglycerin, isomaltodextrin, xanthan gum, gellan gum, tamarind seed gum, and cycloamylose, and
the low-molecular-weight natural product is at least one selected from glucose, sucrose, mannitol, sorbitol, sorbitan, maltitol, stevioside, cyclodextrin, glycerin, menthol, xylitol, glucosamine, catechin, anthocyanin and quercetin, gluconic acid, malic acid, xylose, inositol, phytic acid, menthol, sucralose, fructose, maltose, trehalose, lactosucrose, erythritol, erythritol, ascorbic acid, kojic acid, cholesterol, vanillin, lactic acid, tartaric acid, citric acid, and chlorogenic acid.

6. The oil-resistant agent according to any of claims 1 to 5, wherein the substitution ratio of the hydrogen atom of the hydroxy group by R is 3 to 100%.

7. The oil-resistant agent according to any of claims 1 to 6, wherein
Z is an optionally-substituted aliphatic hydrocarbon group having 1 to 40 carbon atoms or a polysiloxane, and the substituent is a hydroxyl group, an ester group, an R'₃Si group, an (R'O)₃Si group, a carboxyl group, or a salt of a carboxyl group, where each R' is independently, or an alkyl group having 1 to 4 carbon atoms.

8. The oil-resistant agent according to any of claims 1 to 7, wherein a contact angle of n-hexadecane of the oil-resistant agent is 10 degrees or more.

9. The oil-resistant agent according to any of claims 1 to 8, wherein the modified natural product has a melting point of 40 degrees or more or does not have a melting point.

10. The oil-resistant agent according to any of claims 1 to 9, wherein the oil-resistant agent has a viscosity of 5 cP or more and 100 cP or less at a solution concentration of 14.8 mg/mL.

11. The oil-resistant agent according to any of claims 1 to 10, which is a water dispersion composition.

12. The oil-resistant agent according to any of claims 1 to 11, which is for paper.

13. A textile product to which the oil-resistant agent according to any of claims 1 to 12 is attached.

14. A oil-resistant paper comprising the oil-resistant agent according to any of claims 1 to 12.

15. The oil-resistant paper according to claim 14, which is a food packaging material or a food container.

16. A treatment method comprising externally or internally treating paper with the oil-resistant agent according to any of claims 1 to 12.
